(19) **Europäisches Patentamt**
**European Patent Office**
**Office européen des brevets**

(11) **EP 3 683 733 B1**

(12) **EUROPEAN PATENT SPECIFICATION**

(45) Date of publication and mention
of the grant of the patent:
**06.11.2024   Bulletin 2024/45**

(51) International Patent Classification (IPC):
**G06N 3/04** *(2023.01)*       **G06N 3/063** *(2023.01)*
**G06N 3/08** *(2023.01)*

(21) Application number: **20150003.0**

(52) Cooperative Patent Classification (CPC):
**G06N 3/082; G06N 3/045; G06N 3/063**

(22) Date of filing: **02.01.2020**

(54) **A METHOD, AN APPARATUS AND A COMPUTER PROGRAM PRODUCT FOR NEURAL NETWORKS**

VERFAHREN, VORRICHTUNG UND COMPUTERPROGRAMMPRODUKT FÜR NEURONALE NETZE

PROCÉDÉ, APPAREIL ET PRODUIT-PROGRAMME D'ORDINATEUR POUR RÉSEAUX NEURONAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.01.2019   FI 20195011**

(43) Date of publication of application:
**22.07.2020   Bulletin 2020/30**

(73) Proprietor: **Nokia Technologies Oy**
**02610 Espoo (FI)**

(72) Inventors:
• **FAN, Lixin**
**33720 Tampere (FI)**
• **AKSU, Emre Baris**
**33800 Tampere (FI)**

(74) Representative: **Berggren Oy**
**P.O. Box 16**
**Eteläinen Rautatiekatu 10A**
**00101 Helsinki (FI)**

(56) References cited:
**US-A1- 2017 132 511**

**Description**

<u>Technical Field</u>

Various example embodiments relate to neural networks.

<u>Background</u>

Many practical applications rely on the availability of semantic information about the content of the media, such as images, videos, audio etc. Semantic information may be represented by metadata which may express the type of scene, the occurrence of a specific action/activity, the presence of a specific object, etc. Such semantic information can be obtained by analyzing the media.

Recently, the development of various neural network techniques has enabled learning to recognize content directly from the raw data. Neural networks are computerized models that comprise an input layer and an output layer. In addition, the neural networks comprise layered units that form input data into data that is usable by the output layer.

A publication US 2017/0132511 discloses a solution receiving a compressed convolutional neural network (CNN). A media content item to be processed can be acquired. The compressed CNN is utilized to apply a media processing technique to the media content item to produced information about the media content item. It is determined, based on at least some of the information about the media content item, whether to transmit at least a portion of the media content item to one or more remote servers for additional media processing.

<u>Summary</u>

Now there has been invented an improved method and technical equipment implementing the method, for neural networks. Various aspects of the invention include a method, and an apparatus, which are characterized by what is stated in the independent claims. Various embodiments of the invention are disclosed in the dependent claims.

<u>Description of the Drawings</u>

In the following, various embodiments will be described in more detail with reference to the appended drawings, in which

Fig. 1     shows an apparatus according to an embodiment;

Fig. 2     shows an example of a convolutional neural network;

Fig. 3     shows an example of system according to an embodiment;

Fig. 4     shows an example of neural network compression;

Fig. 5     shows an example of an exchange format between a client and a server according to an embodiment;

Fig. 6     shown an example of an exchange format between a client and a server according to another embodiment;

Fig. 7     is a flowchart illustrating a method according to an embodiment; and

Fig. 8     is a flowchart illustrating a method according to another embodiment.

<u>Description of Example Embodiments</u>

In the following, several embodiments of the invention will be described in the context of neural networks. Neural networks have recently prompted an explosion of intelligent applications for IoT (Internet of Things) devices, such as mobile phones, smart watches and smart home appliances. Albeit transferring data to a centralized computation server for processing is appealing, considering the high computational complexity and battery consumption, concerns over data privacy and latency of large volume data transmission have been promoting distributed computation scenarios. To this end, it is beneficial to develop and standardize common communication and representation formats for neural networks in order to enable the efficient, error resilient and safe transmission and reception among device or service vendors.

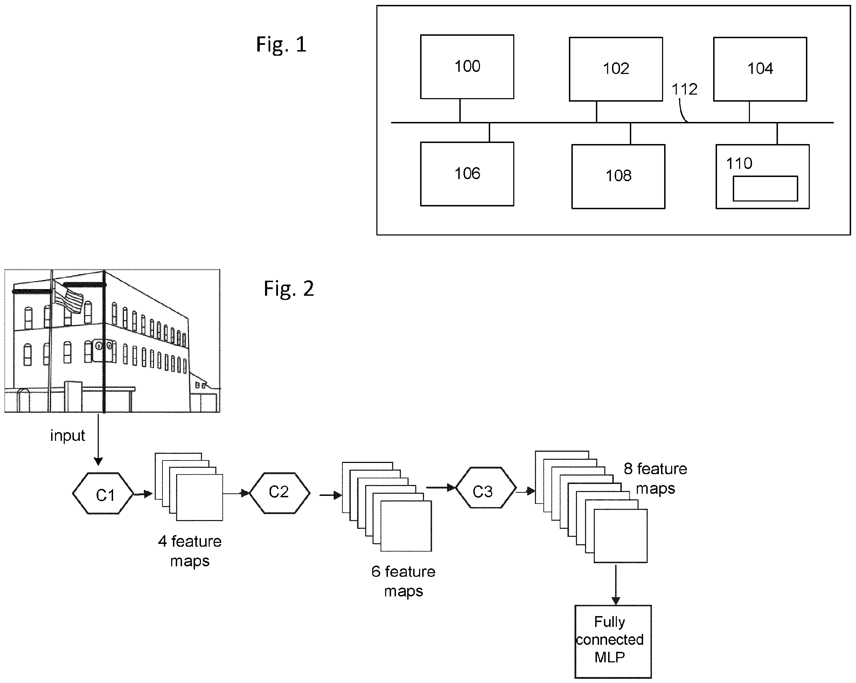

Fig. 1 shows an apparatus representing a client device for the purposes of the present embodiments. The functional blocks of the apparatus can also be found in a server according to the present embodiment. The generalized structure of the apparatus will be explained in accordance with the functional blocks of the system. Several functionalities can be carried out with a single physical device, e.g. all calculation procedures can be performed in a single processor if desired. A data processing system of an apparatus according to an example of Fig. 1 comprises a main processing unit 100, a memory 102, a storage device 104, an input device 106, an output device 108, and a graphics subsystem 110, which are all connected to each other via a data bus 112. A client may be understood as a client device or a software client running on an apparatus.

The main processing unit 100 is a processing unit arranged to process data within the data processing system. The main processing unit 100 may comprise or be implemented as one or more processors or processor circuitry. The memory 102, the storage device 104, the input device 106, and the output device 108 may include other components as recognized by those skilled in the art. The memory 102 and storage device 104 store data in the data processing system 100. Computer program code resides in the memory 102 for implementing, for example, machine learning process. The input device 106 inputs data into the system while the output device 108 receives data from the data processing system and forwards the data, for example to a display. While data bus 112 is shown as a single line it may be any combination of the following: a processor bus, a PCI bus, a graphical bus, an ISA bus. Accordingly, a skilled person readily recognizes that the apparatus may be any data processing device, such as a computer device, a personal computer, a server computer, a mobile phone, a smart phone or an Internet access device, for example Internet tablet computer.

Deep learning is a solution for analyzing data and is a sub-field of machine learning which has emerged in the recent years. Deep learning is a field, which studies artificial neural networks (ANN), also referred to as neural network (NN). A neural network is a computation graph representation, usually made of several layers of successive computation. Each layer is made of units or neurons computing an elemental/basic computation. Deep learning may involve learning of multiple layers of nonlinear processing units, either in supervised or in unsupervised manner, or in semi-supervised manner. Each learned layer extracts feature representations from the input data. Features from lower layers represent low-level semantics (i.e. less abstract concepts, such as edges and texture), whereas higher layers represent higher-level semantics (i.e., more abstract concepts, like scene class). Unsupervised learning applications typically include pattern analysis and representation (i.e., feature) learning, whereas supervised learning applications may include classification of image objects (in the case of visual data).

Deep learning techniques may be used e.g. for recognizing and detecting objects in images or videos with great accuracy, outperforming previous methods. In addition, deep learning techniques are utilized in an ever-creasing number of applications for any type of device, such as an apparatus of Fig. 1. Examples of the applications include various media (video, image, audio) analysis and processing, social media data analysis, device usage data analysis, etc. One difference of deep learning image recognition technique compared to previous methods is learning to recognize image objects directly from the raw data, whereas previous techniques may be based on recognizing the image objects from hand-engineered features (e.g. SIFT features).

Deep learning expects training in order to be able to perform the expected analysis. During the training stage, deep learning techniques build computation layers which extract features of increasingly abstract level. Thus, at least the initial layers of an artificial neural network represent a feature extractor. An example of a feature extractor in deep learning techniques is included in the Convolutional Neural Network (CNN), shown in Fig. 2. This example of a CNN comprises one or more convolutional layers, fully connected layers, and a classification layer on top. CNNs are relatively easy to train compared to other deep neural networks and have fewer parameters to be estimated. Therefore, CNNs are highly attractive architecture to use, especially in image and speech applications.

In the example of Fig. 2, the input to a CNN is an image, but any other data could be used as well. Each layer of a CNN represents a certain abstraction (or semantic) level, and the CNN extracts multiple feature maps. A feature map may for example comprise a dense matrix of Real numbers representing values of the extracted features. The CNN in Fig. 2 has only three feature (or abstraction, or semantic) layers C1, C2, C3 for the sake of simplicity, but CNNs may have more than three convolution layers.

The first convolution layer C1 of the CNN may comprise extracting 4 feature-maps from the first layer (i.e. from the input image). These maps may represent low-level features found in the input image, such as edges and corners. The second convolution layer C2 of the CNN, which may extract 6 feature-maps from the previous layer, increases the semantic level of the extracted features. Similarly, the third convolution layer C3 may represent more abstract concepts found in images, such as combinations of edges and corners, shapes, etc. The last layer of the CNN, referred to as fully connected Multi-Layer Perceptron (MLP) may include one or more fully-connected (i.e., dense) layers and a final classification layer. The MLP uses the feature-maps from the last convolution layer in order to predict (recognize) for example the object class. For example, it may predict that the object in the image is a house.

The goal of a neural network is to transform the input data into a more useful output. One example is classification, where input data is classified into one of N possible classes (e.g., classifying if an image contains a cat or a dog). Another example is regression, where input data is transformed into a Real number (e.g. determining the music beat of a song).

The power of neural networks comes from the internal representation which is built inside the layers. This representation is distributed among many units and is hierarchical, where complex concepts build on top of simple concepts. A neural network has two main modes of operation: training phase and testing phase. The training phase is the development phase, where the neural network learns to perform the final task. Learning may include iteratively updating the parameters of the neural network, for example weights or connections between units. The testing phase is the phase in which the neural network performs the task. Learning can be performed in several ways. The main ones are supervised, unsupervised, and reinforcement learning. In supervised training, the neural network model is provided with input-output pairs, where the output may be a label. In supervised training, the neural network is provided only with input data (and also with output raw data in case of self-supervised training). In reinforcement learning, the supervision is sparser and less precise; instead of input-output pairs, the neural network gets input data and, sometimes, delayed rewards in the form of scores (E.g., -1, 0, or +1).

The neural network may be trained on a training data set, which is supposed to be representative of the data on which the neural network will be used. During training, the neural network uses the examples in the training dataset to modify its learnable parameters (e.g., its connections' weights) in order to achieve the desired task. Input to the neural network is the data, and the output of the neural network represents the desired task. Examples of desired tasks are classification of objects in images, denoising of images (or other types of data, such as heart-rate signals), semantic segmentation. For such tasks, the output of the neural network may be a probability distribution over object classes for the whole image, a denoised image, a probability distribution over classes for each input pixel, respectively.

Convolutional Neural Networks may be used in various applications. However, they have a huge data storage requirement, whereupon a compressed representation of neural networks (NN) is a preferred feature. The compressed representation of NNs includes core neural network compression features that, for example, represent different artificial neural network types (e.g., feedforward neural networks such as CNN and autoencoder, recurrent neural networks such as LSTM (Long short-term memory), etc.); enable efficient incremental updates of compressed representations of NNs; enable scalability, i.e. NNs of different performance can be obtained from subsets of the complete compressed representation; inference with compressed neural network, enable use under resource limitations (computation, memory, power, bandwidth).

Various compression methods include, for example, a weight quantization; lossless source coding; pruning, where less contributing weights are removed, SVD (Singular Value Decomposition); filter selection; structure design. While compression reduces the size of the neural network, it may adversely affect performance of the neural network. Therefore, there may be a performance deterioration value or level associated with a compression method and/or a compression ratio. Deterioration of the compressed neural network may be determined by comparing performance metrics of the original and the compressed neural network, as disclosed in various embodiments.

Sharing trained neural network models or parts of deep neural networks has been very important practices in the rapid progress of research and development of AI systems. At the same time, it is imperative to share NN models, which are often complex and computational resources demanding, in an efficient and manageable manner.

The present embodiments are targeted to a NN representation that supports intelligent and flexible sharing of compressed neural networks as web-based services in cloud environments. Thus, the present embodiments improve the provision of customized neural networks to clients.

The present embodiments are generally related to a communication between a client and a server, where a client receives a compressed neural network from a server, which compressed neural network has been generated according to client specified requirement(s). In one embodiment, the server may cause generation of the compressed neural network in response to receiving the request from the client. Alternatively, the server may have caused generation of the compressed neural network prior to receiving the request from the client. In this case, the server may select an available compressed neural network that substantially complies with the request.

According to a first example, the client comprises a neural network for a certain task. The client uploads the neural network with specified requirement(s) to the NN server that is configured to perform a compression of the neural network according to the requirement(s). The compressed neural network, or at least an identification for accessing the compressed neural network, is transmitted to the client, whereupon the client is able to operate with the compressed neural network or to share it forward, e.g. within an application, or to cause the neural network to perform a desired task.

According to a second example, the client may not have a neural network, but needs one for a specific task. The client may send a request for the NN server, wherein the request comprises at least parameters for a needed neural network. If there is a neural network (e.g. VGG16, ResNet51, DenseNet, etc.) available in a public database, the client may also include an indication/pointer/URL to such neural network. The server either selects a suitable or identified neural network from the database or trains a new neural network if a suitable neural network (i.e. a NN that mostly matches with the requirements) is not found. Such a selected neural network is then compressed and transmitted in the compressed form to the client. The client is then able to operate with the compressed neural network or share it forward, e.g. within an application, or to cause the neural network to perform a desired task.

According to an embodiment, the client is an AI capable smartphone. AI related neural networks may be deep neural networks, which are very big in size (for example 1 GB (gigabytes)). Distribution of such a NN as an application or operating system update to millions of smartphones may not be feasible. Therefore, a compression of a neural network to a reasonable size with reasonable loss of performance may be needed. The "NN Compression as a service" platform according to present embodiments is able to perform the compression of the neural network (which is either received from the client; or selected from a database; or generated as a response to the request) and transmit the compressed NN as a response to the client. The server may have specified the final parameters about a performance of the neural network, etc., in the response. After having received the compressed neural network, the client may distribute it within an application or platform. Since the NN compression may use hardware and storage resources that may need to be scaled, the compression service can be implemented as a cloud service that can be accessed by a web service.

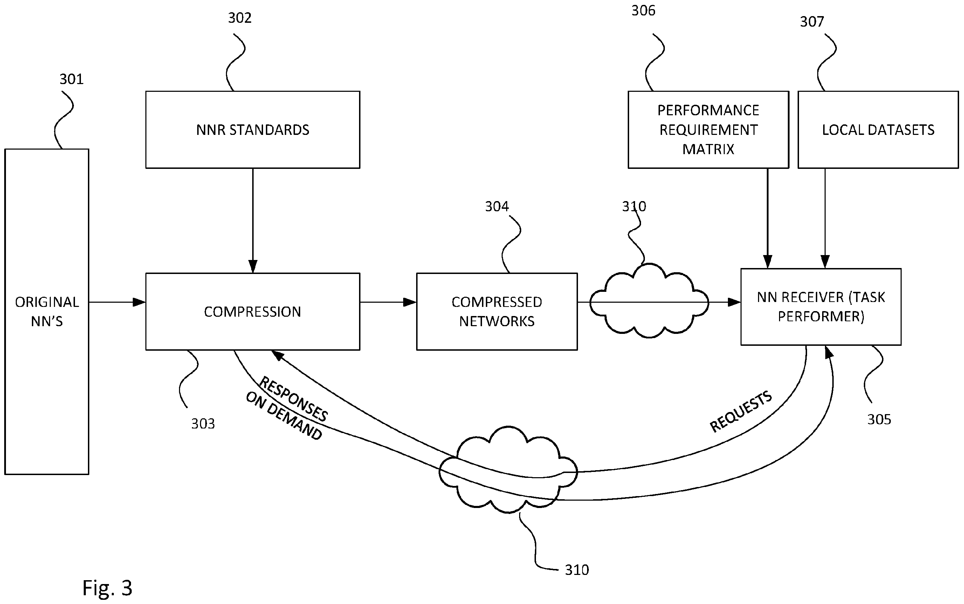

Figure 3 illustrates an overview of a use case and a diagram of system components for NN-on-demand services. In the Figure 3, NN receiver 305 represents a client device requesting a neural network from a server. The NN receiver 305, e.g. a client, is configured to perform a task e.g. analyzing and processing of various media (video, image, audio), analyzing of social media data or of device usage data, just to mention few as examples, by means of a neural network. However, as discussed in the example 2, the NN receiver 305 may not permanently comprise any neural networks of its own, for example for memory saving purposes. Therefore, the NN receiver 305 is configured to request for a suitable neural network for a certain task from a server. Alternatively, according to example 1, the NN receiver 305 has a neural network, compression of which the NN receiver 305 is configured to ask from the server.

The NN receiver 305 may include at least one or more requirements for the neural network and/or for the compression of the neural network in the request. In addition, according to an example 1, the NN receiver 305 may include the original neural network to the request or an identification of one that should be compressed. The requirement(s) may be defined in a performance requirement matrix 306, and they can comprise for example the required inference performance, compression ratio, or time of delivery, etc. The requirement(s) may also be provided in other data structure or format, for example one or more tables, lists, or files. For simplicity, embodiments have been described as using a performance requirement matrix as an example. The request may be sent to the NN provider through data communication network 310. Based on the request from the NN receiver 305, the NN provider, which may be for example a server or another type of computing apparatus such as for example a user device, a mobile phone, or a tablet computer, is configured to obtain a suitable neural network for compression. The obtaining can be achieved by selecting a suitable neural network from the a set of original neural networks 301; by training a new version of the neural network to be the suitable neural network, or to obtain the neural network from the request of the client. The term original neural network may be understood as a neural network which is subject to compression. It is appreciated that such original network may have been obtained based on prior operations performed on the original neural network. For example, the original neural network may be a fine-tuned version of another neural network, or it may have been compressed and decompressed earlier.

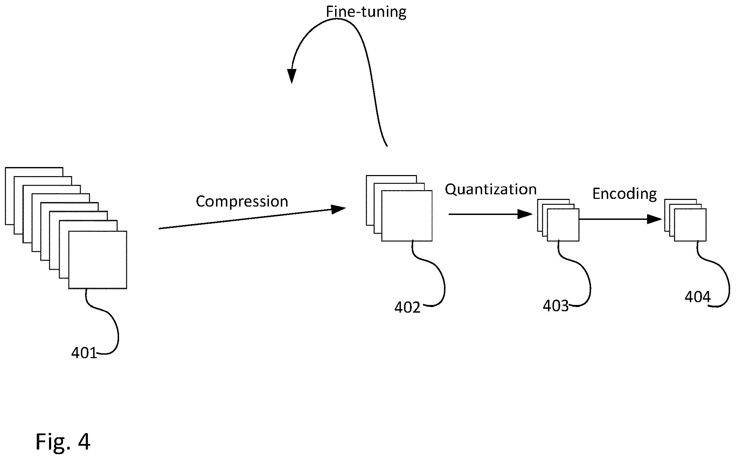

After having obtained a suitable neural network, the NN provider is configured to perform a compression 303 of the neural network to have a compressed representation of the neural network, i.e. compressed neural network 304. According to another embodiment, the server may request the compressed version of the neural network from another party, for example from another server over a communication network. The compression 303, which is discussed in more detailed manner with reference to Figure 4, can be implemented according to NNR (Neural Network Representation) standards 302. The compressed neural network 304, or at least some information identifying and/or accessing it, is then provided to the NN receiver 305 through a communication network 310. Accessing a neural network may be understood for example as providing instructions for executing the neural network, or, downloading, updating, or modifying the neural network, or parts thereof. For example, a client may access neural network located at a server to cause execution of the neural network by the server. The client may also access the neural network by downloading it for execution at the client. Downloading may be done in streaming mode, for example, the client may initiate execution of some layers of the neural network, while other layers are still being downloaded from the server. In another example, a server may access a neural network located at the server or another server to update or modify the neural network, for example based on training carried out or caused by the server. In response to receiving the compressed neural network or metadata associated with the compressed neural network, the NN receiver 305 may be configured to determine whether the received compressed neural network is satisfactory. The determining can be based on the information provided in the performance requirement matrix 306. In addition, the performance requirement matrix can be updated by the compression server with the actual metrics for the compressed neural networks, when the compression has been applied.

If the neural network compression process is unsatisfactory based on the requirements, the client device 305 may request for a new neural network from the server by means of a new request with new requirements.

If the received neural network is in accordance with the requirements of the client device 305, the client device 305 is configured to perform the expected task by means of it by using the local training datasets 307.

As said, the communication between the NN receiver 305 and the NN provider is enabled through Internet to which the NN receiver 305 and the NN provider are able to access via a communication network 310. The communication network can be a wireless or wired local area network, a mobile telecommunications network, for example Global System for Mobile Communications (GSM), Genera lPacket Radio Service (GPRS), cdmaOne, CDMA2000 (Code-Division Multiple Access), Evolution-Data Optimized (EV-DO), Enhanced Data Rates for GSM Evolution (EDGE), Universal Mobile Telecommunications System (UMTS), Digital Enhanced Cordless Telecommunications (DECT), Digital AMPS (IS-136/TDMA), Integrated Digital Enhanced Network (iDEN). Therefore, both the client device (i.e. NN receiver 305) and the server device (which is the NN provider in this example) comprises network-specific means for connecting to the respective data communication network 310 and means for transferring data through said data communication network 310, in addition to the functional elements discussed in connection to Figure 1.

Figure 4 illustrates an example of a compression, referred to with a reference number 303 in Figure 3. The compression begins by obtaining an original neural network(s) 401, which is(are) compressed according to any compression approach, e.g. pruning, SVD, filter selection, structure design. The compression results in a compressed NN model 402, that can be further fine-tuned by fine-tuning the compression method. The compressed model 402 may be quantized to result in a quantized NN model 403. Finally, the quantized NN model 403 is encoded to obtain a coded model 404 of the neural network.

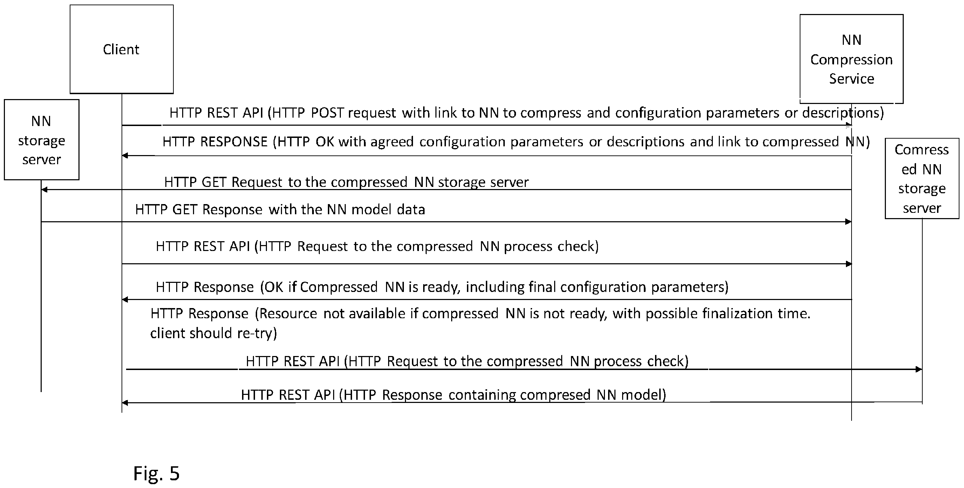

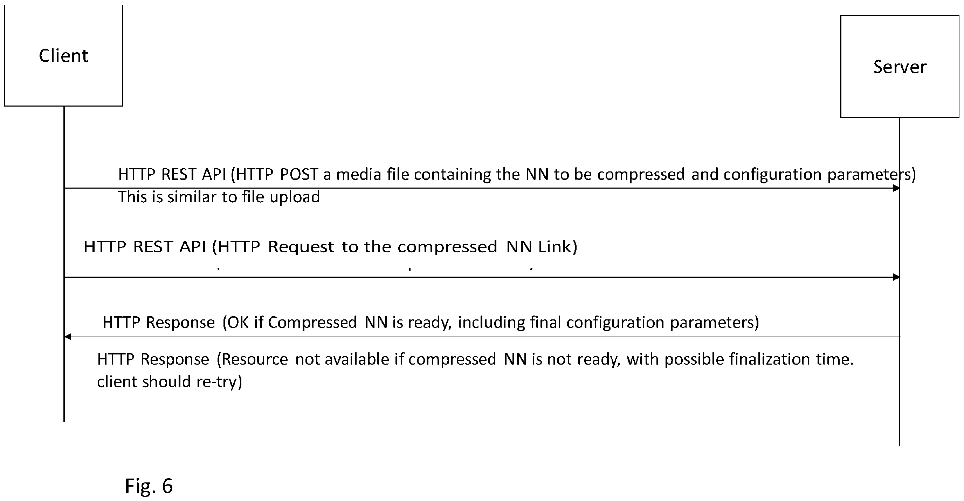

An exchange format for neural network compression according to an embodiment is illustrated in Figure 5. Another embodiment for the exchange format is illustrated in Figure 6.

Figure 5 illustrates an embodiment for the example 1, relating to a Rest API based exchange format of compressed NN between client and server. REST API, HTTP and other protocols are provided as examples and may be used in exchange of other similar network based processing and access protocols. Figure 5 shows a NN storage server, a client, a NN compression server and a compressed NN storage server. In this embodiment, a client requests a NN compression service to compress a neural network. The request comprises a link to, or another identification of, the desired (original) neural network. The request may also include configuration parameters or descriptions according to which the compression is to be performed. The NN compression service requests the indicated neural network from a NN storage server and receives the NN model data as a response. The client device is configured to request the compressed NN from the NN compression service. If the compressed neural network is not ready, the NN compression service may ask the client to retry the request and may include an estimated finalization time to the response. If the compressed neural network is ready, the NN compression service may include the final configuration parameters, for example an identification of the compressed neural network, to the response, whereupon the client is able to ask the compressed NN from the compressed NN storage server.

Figure 6 illustrates another embodiment for the example 1, that relates to a storage format based message exchange. Figure 6 shows a client and a server, wherein a client sends a file, for example a media file, containing a NN to be compressed and/or configuration parameters associated with the neural network and/or the desired compression to the server. Then the client sends a request to access the compressed neural network. The server responds with an OK if the compressed neural network is ready, wherein the response may comprise also final configuration parameters of the compressed neural network. If the neural network is not ready, the server response indicates (but not limited to) "Resource not available" or a similar message. It is appreciated that even though content of a request or response message may have been illustrated to be included in a single message, in some embodiments such information may be distributed between more than one request or response, for example at least two consecutive requests or responses. For example, a first response message may comprise an estimated time of delivery of the neural network indicated in a request message. A second response message may comprise and indication of a performance of the neural network. The second response message may be sent after completing generation of the requested neural network.

In a request from a client device 305 (which is an example of a NN receiver) to a server (example of a NN provider), the exchange format comprises any one or more of the following fields relating to:

- Description(s) of required performance metric;
- Description(s) of required NN model sizes;
- Description(s) of required computational complexities;
- Description(s) of (optional) local datasets;
- Description(s) of required NN tasks and compression methods.

The fields of the exchange format from client to server are discussed in more detailed manner in below: Descriptions of required performance metric: Depending on different compression ratios, the performance of original NNs 301 may be compromised to various extents. A desired performance metric may therefore include pairs of (compression ratio and performance deterioration, e.g.;

(ratio=0.1, deterioration=0.01

(ratio=0.5, deterioration=0.02)

(ratio=0.9, deterioration=0.5).

It is appreciated that the compression rations may be specified by the client device 305, for example according to the available computational resources, e.g. the available memory on GPUs to run requested neural networks. The required NN model size may be expressed e.g. in MB (megabytes). Compression ratio may be calculated according to the sizes of the compressed and original NN models, for example *ratio=compressed_size / original_size*

Deterioration level(s) may be specified by the client device 305. According to an embodiment, the desired deterioration level equals to the original performance minus the acceptable performance for corresponding compression ratio, i.e. *desired_deterioration_level=original_performance - acceptable performance.* Alternatively, the deterioration level can be defined as the ratio of the acceptable performance with respect to the original performance, i.e. *deterioration_level=acceptable-performance/original performance.*

How to determine the performance depends on the application/task of the neural network. For example, for image classification tasks, the accuracy may be measured by the ratio between *correctly_classified_image* with respect to *all_images.* For semantic segmentation tasks, the accuracy may be measured by the Intersection over Union (IoU) ratio, i.e. *accuracy =intersection /union,* wherein the intersection corresponds to predicted segmentation labels, ground-truth labels, and union corresponds to the predicted segmentation labels, ground-truth labels

According to yet another embodiment, the deterioration level can be determined by the service provider.

Description of required model size(s): The client device (or other requesting device) may have a limited storage capacity (in byte size) for the NN in the run-time environment. Thus, by specifying the target model size for the NN, together with the deterioration_level, the client device can provide the requirement for the server to apply a compression so that the NN does not exceed the target byte size, as well as meet the deterioration_level target. These two targets may be conflicting, whereupon it may turn into a compression optimization problem on the server side. Multiple NN models with different sizes (below or slightly exceeding the provided model size target) may be returned by the server, letting the client to make the final decision.

Description of required computational complexity(ies): According to an embodiment, a client device 305 may also one or more computational complexities that are expected from the compressed neural network(s). For example, a number of floating-point operations (FLOPs) may be defined in the request. The number of FLOPs may for example define a maximum number of operations that are allowed to be assigned to the requested neural networks is specified.

Description(s) of local datasets: According to an embodiment, a client device 305 may specify either proprietary or public datasets that can be used to train, fine-tune or prune the original NNs 301. A reference field in the request may include e.g. a unique identifier or a link to such dataset. Optionally, metadata of the datasets may also be specified to facilitate the training/re-training/pruning of the original NNs 301. The metadata may include various types of information about the dataset, for example, one or more data types of the dataset (e.g. image, video), one or more file formats of the datasets of the like.

Information on the local datasets may be sent to the NN service provider, so that the estimation of computational complexities, time and probabilities of success can be calculated accordingly by the NN provider.

Descriptions of required NN tasks and compression methods: This field may specify one or more tasks to be performed by the required NNs. Optionally, this field may also specify one or more compression methods, e.g. pruning, sparsifying and/or channel-coding (e.g. entropy coding, Huffman coding or CABAC coding).

Based on a request received from the client 305, the NN provider may determine one or more neural networks to be provided to the client, unless already included in the client's request. In one embodiment, the server selects a neural network that meets, or at least substantially meets, the request of the client. In one embodiment, the NN provider may train a new neural network, or a new version of a neural network based on client's requirements specified in the request and/or the information in the client's request. In a response from the server (or, in general any NN provider) to client device (or in general any NN receiver), the exchange format may comprise any one or more of the following fields relating to:

- Description(s) of one or more returned NN handles (or links or similar pointers to the NN data);
- Description(s) of estimated time when returned NNs are active;
- Description(s) of estimated success probability(ies) of returned NN(s);
- Description(s) of estimated and/or actual performance matrix;
- Description(s) of actual NN model size(s);
- Description(s) of actual NN compression method(s) and/or parameter(s).

Fields of the exchange format may be also referred to as configuration parameters. Configuration parameters may be related to a requested neural network or a provided neural network.

The fields of the exchange format are discussed in more detailed manner in below:

Descriptions of returned NN handles (or links): This field may specify one or more program handles to the one or more returned neural networks. In general, a handle may comprise a reference for accessing the neural network. In one embodiment, the handle may be used as a function call to invoke execution of the neural network. The neural network may be executed internally at the client or the client may cause remote execution of the neural network, for example at the NN provider server or another server. Such a handle can be for example directly used by the program scripts running on the client side 305. The availability of NNs, however, may be determined by other fields elaborated below.

According to an embodiment, such a handle can be efficiently and uniquely implemented as a 128-bit universally unique identifier (UUID), which can be directly referenced in program scripts of different programming languages, e.g. python or JavaScript. Therefore, in one embodiment the identification of the compressed neural network received in the response message from the server may be included, e.g. copied, in one or more predetermined locations in a program code. This may be done to access the identified neural network, for example to cause execution of it. A neural network handle, a link to a neural network, or an UUID are examples of means for identifying a neural network.

Descriptions of estimated time when returned NNs are active: Since the required NN (e.g. a NN with required performance) may not be available on the server, it may initiate one or more training processes to train or fine-tune the required NN. This field may specify the estimated date and time by which the required NN is expected to be available. For example, this field may adopt the Coordinated Universal Time (CUT) for this purpose. A client may use this information to access the neural network at the estimated time.

In terms of the estimations of this time, for example at least one of the two following categories of methods can be adopted:

1. Historical metadata based methods: this approach refers to using metadata of similar request that have been stored on the server, to estimate the required time for (restraining similar NNs. Note that the search of similar metadata may entail a preprocessing process, which may cluster all stored metadata entries based on similarity metrics such as Euclidean or Mahalanobis distances.

2. Complexity analysis based methods: based on the neural network architecture of the required NN, this approach may analyze a) computational complexities e.g. the number of floating-point operations (FLOPs) or the number of epochs involved in training; b) the training dataset size; and/or c) the specification of computational resources, to estimate the time needed for (re-)training required NNs.

The server may initiate the training of requested NNs with the entire training dataset, for a few epochs, e.g. 3, and measure the required time e.g. 3 minutes, the estimated time of the entire training process may then be calculated as the *number of epochs * 1 minutes_per_epoch.*

Optionally, the server may initiate the training of requested NNs with a subset of the training data, e.g. 1%, and measure the required time, the estimated time of the entire training process may then be calculated as *the_measured_training_time * 100.*

Still, according to yet another embodiment, the server may initiate the training in a cloud environment with e.g. a thousand GPUs to be used for the actual training process, then the *estimated time = the measured training/1000.*

Optionally, the combination of above two approaches can also be adopted.

Descriptions of estimated success probabilities of returned NNs: The probability that the NN provider is able to provide required NN(s) varies, according to the nature of required tasks, performance metric, or given training datasets. E.g. if the requested ratio of compression by pruning is too high, it may be possible that the required NNs end up with NO filters kept at certain layers, thus destructing the entire NNs.

For example, at least one or the two following types of approaches can be used to estimate the probability of success:

1. Historical metadata-based methods: this approach refers to using metadata of similar requests that have not been stored on the server, to estimate the success probability. It is appreciated that the search of similar metadata may entail a preprocessing process, which may cluster stored metadata entries based on similarity metrics such as Euclidean or Mahalanobis distances.

2. One may analyze hyper-parameters of required NNs, e.g. the ratio of pruning filters, to estimate the probability of success.

According to an embodiment, the ratio of r pruning filters may be used to determine the probability of success. This dependency can be succinctly represented by the formula:

$$Prob(r) = \begin{cases} 1 - \dfrac{r}{r0} * (1 - p0) & if\ 0 \leq r < r0 \\ p0 - \dfrac{r - r0}{r1 - r0} * (p0 - p1) & if\ r0 \leq r < r1 \\ p1 - \dfrac{r - r1}{1 - r1} * (p1) & if\ r1 \leq r \leq 1 \end{cases}$$

in which r is the pruning ratio, and p is the probability of success. Specifically, four points (0, 1), (r0, p0), (r1, p1), (1, 0) jointly define a piece-wise linear model with three line segments connecting these four points.

The actual parameters (r0, p0), (r1, p1) are different according to the training dataset, the requested neural network architectures etc., and may be estimated from historical data.

Once the model parameters are estimated, then it can be used to estimate the probability of success for given pruning ratios.

Optionally, the combination of above two approaches can also be adopted. The client may use the probability of success to determine whether to wait for training the new neural network, or to issue an updated request with updated requirements. The estimated time for providing the new neural network may be also used for the same purpose. For example, the client may be configured to wait for the new neural network, if the estimated time of delivery is within a predetermined time, for example a minute or an hour, and/or if the estimated probability of success is at least a predetermined percentage, for example 80 %. Otherwise, the client may send the updated request. For example, the client may decide to allow higher compression ratio (less compression), a higher memory, higher complexity, and/or higher deterioration for the new neural network. The client may issue a new request without waiting for provision of the previously requested neural network.

Descriptions of estimated and actual performance matrix: Although clients may specify required performance metric, the actual performance metric of the returned neural network may vary. Also, the estimated performance metric on the server side may be different too. This field may specify the estimated and/or actually measured performance metric, to be returned to the requesting client.

Depending on the actual performance metric, the returned NN model(s) may be suitable for deployment or not. Depending on the performance metric of the returned neural network, the client may decide to pursue different actions, e.g. to accept the returned NN model if it is satisfactory, or to re-issue a request with modified performance metrics if the returned NN model does not fulfill the requirement.

Descriptions of actual model sizes: In the same vein, the actual NN model size may be different from the requested ones. This field may specify the actual model size(s) of the returned neural network.

Depending on the returned NN model size, it may be suitable to be deployed, or in case the returned NN model size is too big, the request has to be re-issued, possibly with compromised performance metric.

The term "returned neural network" may refer to a neural network selected or trained by the NN provider. Subsequently this neural network may or may not be provided to the client. According to an embodiment, the server may send a message to the client to inform the client about the new neural network, for example at least one parameter of the returned neural network, such as performance. The server may provide the returned neural network to the client in response to receiving an acceptance message from the client. According to an embodiment, the server may determine that a neural network that is already available substantially meets the requirement(s) of the client and may provide the neural network or inform the client about this neural network. The term 'substantially meeting the requirements' may be understood as meeting most of the requests, for example meeting most of the requirements but failing to meet a predetermined number of requirements, and/or as almost meeting individual requests, for example failing to meet all requests by a small margin, for example a few per cents in terms of memory size or complexity. The client may therefore select between fast delivery of a suboptimal neural network or waiting for provision of a neural network that fulfils the requirements.

Description(s) of actual NN compression method(s) and parameter(s): For example, if the compression method comprises pruning, this method may be also associated with certain parameter(s), such as for example to which layer it should be applied, a pruning technique, or threshold(s), etc. These may also overlap with the performance matrix to some extent. As another example, if the compression method comprises parameter binarization, the method may include quantization of the neural network model weights. Different quantization levels can be applied to different layers, e.g. one layer may have eight bit precision, while another may have four bit precision. Such configurations can be pre-selected by the client and sent via parameters of selected NN compression method to the NN provider.

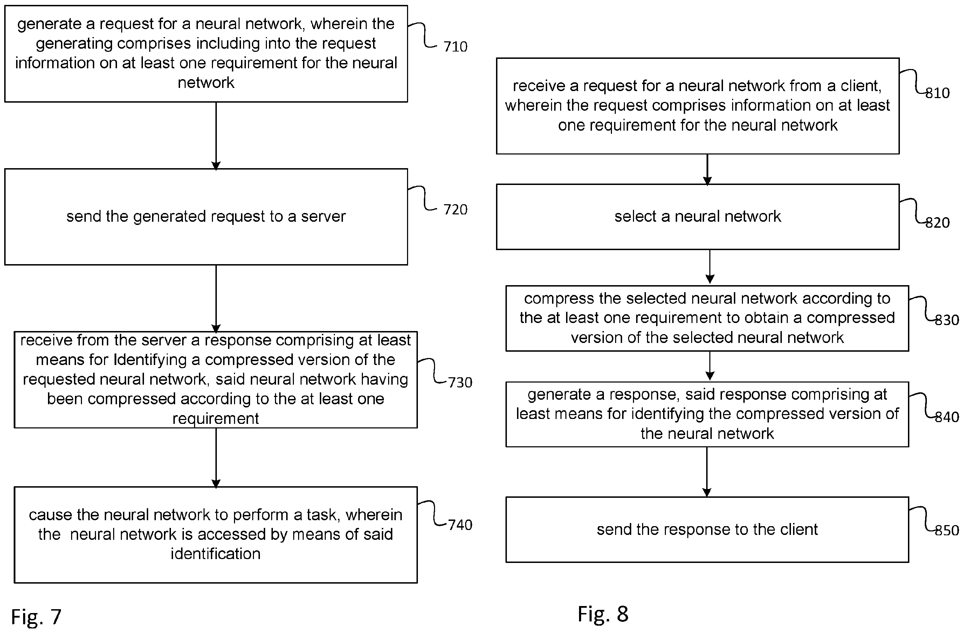

Fig. 7 is a flowchart illustrating a method according to an embodiment. A method comprises generating 710 a request for a neural network, wherein the generating comprises including into the request information on at least one requirement for the neural network; sending 720 the request to a server; receiving 730 from the server a response comprising at least means for identifying a compressed version of the requested neural network, said neural network having been compressed according to the at least one requirement; and causing 740 the neural network to perform a task, wherein the neural network is accessed by means of said identification.

An apparatus according to an embodiment is a client device comprising means for generating a request for a neural network, wherein the generating comprises including into the request information on at least one requirement for the neural network; means for sending the request to a server; means for receiving from the server a response comprising at least means for identifying a compressed version of the neural network, said neural network having been compressed according to the at least one requirement; and means for causing the neural network to perform a task, wherein the neural network is accessed by means of said identification. The means comprises a processor, a memory, and a computer program code residing in the memory. The processor may further comprise a processing circuitry.

Fig. 8 is a flowchart illustrating a method according to an embodiment. A method comprises receiving 810 a request for a neural network from a client, wherein the request comprises information on at least one requirement for the neural network; selecting 820 a neural network; compressing 830 the selected neural network according to the at least one requirement to obtain a compressed version of the selected neural network; generating a response, said response comprising at least means for identifying the compressed version of the neural network; and sending 850 the response to the client.

An apparatus according to an embodiment is a server, comprising means for receiving a request for a neural network from a client, wherein the request comprises information on at least one requirement for the neural network and/or for the compression of the neural network; means for selecting a neural network; means for compressing the selected neural network according to the at least one requirement to obtain a compressed version of the selected neural network; means for generating a response, said response comprising at least means for identifying the compressed version of neural network; and means for sending the response to the client. The means comprises a processor, a memory, and a computer program code residing in the memory. The processor may further comprise a processing circuitry.

The various embodiments of the invention can be implemented with the help of computer program code that resides in a memory and causes the relevant apparatuses to carry out the invention. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of an embodiment. The computer program code may reside on a non-transitory computer readable medium.

It is also noted herein that while the above describes example embodiments, these descriptions should not be viewed in a limiting sense. Rather, there are several variations and modifications, which may be made without departing from the scope of the present disclosure as, defined in the appended claims.

**Claims**

1. A method executed by a client device, comprising:

   - generating a request for a compressed neural network, wherein the generating request comprises at least an indication of an original neural network for a certain task, and including into the request the following requirements

      a description of a task of the neural network;
      a desired performance of the compressed neural network executing the task, wherein the desired performance of the compressed neural network is defined by a compression ratio and a deterioration level, where the compression ratio is specified according to computational resources of the client device, and wherein the used compression method is at least one of the following: a weight quantization, lossless source coding, pruning, singular value decomposition, filter selection, or structure design;

   - sending the request to a server;
   - receiving from the server a response comprising at least an identification for accessing at least one compressed neural network, said compressed neural network having been generated by the server with respect to an original neural network according to said requirements; and
   - obtaining the compressed neural network by means of said identification, and
   - running the compressed neural network to perform the task.

2. A method executed by a server device, comprising:

- receiving a request for a compressed neural network from a client, wherein the request comprises at least an indication of the original neural network for a certain task, and at least the following requirements for the neural network:

a description of a task of the neural network;
desired performance of the compressed neural network executing the task, wherein the desired performance of the compressed neural network has been defined by a compression ratio and a deterioration level, where the compression ratio has been specified according to computational resources of the client device, and wherein the used compression method is at least one of the following: weight quantization, lossless source coding, pruning, singular value decomposition, filter selection, or structure design;

- determining at least one original neural network according to said indication;
- compressing the determined at least one original neural network according to said requirements to obtain at least one compressed neural network;
- generating a response, said response comprising at least an identification for obtaining said at least one compressed neural network; and
- sending the response to the client.

3. An apparatus comprising:

- means for generating a request for a compressed neural network, wherein the generating request comprises at least an indication of an original neural network for a certain task, and including into the request the following requirements

a description of a task of the neural network;
a desired performance of the compressed neural network executing the task, wherein the desired performance of the compressed neural network is defined by a compression ratio and a deterioration level, where the compression ratio is specified according to computational resources of the client device, and wherein the used compression method is at least one of the following: a weight quantization, lossless source coding, pruning, singular value decomposition, filter selection, or structure design;

- means for sending the request to a server;
- means for receiving from the server a response comprising at least an identification for accessing at least one compressed neural network, said compressed neural network having been generated by the server with respect to an original neural network according to said requirements; and
- means for obtaining the compressed neural network by means of said identification, and
- means for running the compressed neural network to perform the task.

4. The apparatus according to claim 3, where the information on said requirements further comprises one or more of the following:

- a required performance metric;
- a required neural network size;
- a required computational complexity;
- an identification of training dataset;
- identification of a compression method.

5. The apparatus according to claim 3 or 4, further comprising means for determining whether the compressed neural network is satisfactory, the determining being based on the information on the at least one requirement and information on the compressed neural network, and in response to determining that the compressed neural network is unsatisfactory, means for resending the request to a server, the request comprising at least one updated requirement for the compressed neural network.

6. The apparatus according to any of the claims 3 to 5, further comprising means for accessing the compressed neural network over a communication network to cause the server or another server to perform the task by the compressed neural network.

7. The apparatus according to any of the claims 3 to 6, where the response from the server comprises one or more of the following:

- a neural network handle;
- an estimated time when the identified neural network is active;
- an estimated probability of success for identifying a neural network that fulfils the requirements;
- an estimated and/or actual performance matrix of the identified neural network;
- an actual model size of the identified neural network;
- a compression method and/or at least one compression parameter.

8. The apparatus of any of claims 3 to 7, wherein the means comprises at least one processor; and at least one memory including computer program code, the at least one memory and computer program code configured to, with the at least one processor, cause the performance of the apparatus.

9. An apparatus comprising:

- means for receiving a request for a compressed neural network from a client, wherein the request comprises at least an indication of the original neural network for a certain task, and at least the following requirements for the neural network:

   a description of a task of the neural network;
   desired performance of the compressed neural network executing the task, wherein the desired performance of the compressed neural network has been defined by a compression ratio and a deterioration level, where the compression ratio has been specified according to computational resources of the client device, and wherein the used compression method is at least one of the following: weight quantization, lossless source coding, pruning, singular value decomposition, filter selection, or structure design;

- means for determining at least one original neural network according to said indication;
- means for compressing the determined at least one original neural network according to said requirements to obtain at least one compressed neural network;
- means for generating a response, said response comprising at least an identification for obtaining said at least one compressed neural network; and
- means for sending the response to the client.

10. The apparatus according to claim 9, where the information on said requirements further comprises one or more of the following:

- a required performance metric;
- a required neural network size;
- a required computational complexity;
- an identification of training dataset;
- an identification of a compression method.

11. The apparatus according to claim 9 or 10, where the response to the client device comprises one or more of the following:

- a neural network handle;
- an estimated time when the identified neural network is active;
- an estimated probability of success for identifying a neural network that fulfils the requirements;
- an estimated and/or actual performance matrix of the identified neural network;
- an actual model size of the identified neural network;
- a compression method and/or at least one compression parameter.

12. The apparatus according to any of the claims 9 to 11, further comprising means for generating a new network as a response to the request from the client device and selecting the new neural network for compression.

13. The apparatus according to claim 12, wherein the new network is generated by training it with the training dataset identified by the client.

**Patentansprüche**

1. Verfahren, das von einer Clientvorrichtung ausgeführt wird und Folgendes umfasst:

   - Erzeugen einer Anforderung eines komprimierten neuronalen Netzwerks, wobei das Erzeugen einer Anforderung mindestens eine Anzeige eines neuronalen Originalnetzwerks für eine gewisse Aufgabe und das Einbinden der folgenden Voraussetzungen in die Anforderung umfasst

     eine Beschreibung einer Aufgabe des neuronalen Netzwerks;
     eine gewünschte Leistung des komprimierten neuronalen Netzwerks, das die Aufgabe ausführt, wobei die gewünschte Leistung des komprimierten neuronalen Netzwerks durch ein Komprimierungsverhältnis und ein Verschlechterungsniveau definiert ist, wo das Komprimierungsverhältnis gemäß Rechenressourcen der Clientvorrichtung spezifiziert ist und wobei das verwendete Komprimierungsverfahren mindestens eines von Folgendem ist: eine Gewichtungsquantisierung, eine verlustfreie Quellcodierung, eine Beschneidung, eine Singulärwertzerlegung, eine Filterauswahl oder ein Strukturdesign;

     - Senden der Anforderung an einen Server;
     - Empfangen einer Antwort vom Server, die mindestens eine Identifizierung für einen Zugriff auf mindestens ein komprimiertes neuronales Netzwerk umfasst, wobei das komprimierte neuronale Netzwerk mit Bezug auf ein neuronales Originalnetzwerk gemäß den Voraussetzungen vom Server erzeugt wurde; und
     - Erhalten des komprimierten neuronalen Netzwerks mittels der Identifizierung, und
     - Betreiben des komprimierten neuronalen Netzwerks, um die Aufgabe durchzuführen.

2. Verfahren, das von einer Servervorrichtung ausgeführt wird und Folgendes umfasst:

   - Empfangen einer Anforderung eines komprimierten neuronalen Netzwerks von einem Client, wobei die Anforderung mindestens eine Anzeige des neuronalen Originalnetzwerks für eine gewisse Aufgabe und mindestens die folgenden Voraussetzungen für das neuronale Netzwerk umfasst:

     eine Beschreibung einer Aufgabe des neuronalen Netzwerks;
     gewünschte Leistung des komprimierten neuronalen Netzwerks, das die Aufgabe ausführt, wobei die gewünschte Leistung des komprimierten neuronalen Netzwerks durch ein Komprimierungsverhältnis und ein Verschlechterungsniveau definiert wurde, wo das Komprimierungsverhältnis gemäß Rechenressourcen der Clientvorrichtung spezifiziert wurde und wobei das verwendete Komprimierungsverfahren mindestens eines von Folgendem ist: Gewichtungsquantisierung, verlustfreie Quellcodierung, Beschneidung, Singulärwertzerlegung, Filterauswahl oder Strukturdesign;

     - Bestimmen von mindestens einem neuronalen Originalnetzwerk gemäß der Anzeige;
     - Komprimieren des bestimmten mindestens einen neuronalen Originalnetzwerks gemäß den Voraussetzungen, um mindestens ein komprimiertes neuronales Netzwerk zu erhalten;
     - Erzeugen einer Antwort, wobei die Antwort mindestens eine Identifizierung zum Erhalten des mindestens einen komprimierten neuronalen Netzwerks umfasst; und
     - Senden der Antwort an den Client.

3. Einrichtung, die Folgendes umfasst:

   - Mittel zum Erzeugen einer Anforderung eines komprimierten neuronalen Netzwerks, wobei das Erzeugen einer Anforderung mindestens eine Anzeige eines neuronalen Originalnetzwerks für eine gewisse Aufgabe und das Einbinden der folgenden Voraussetzungen in die Anforderung umfasst

     eine Beschreibung einer Aufgabe des neuronalen Netzwerks;
     eine gewünschte Leistung des komprimierten neuronalen Netzwerks, das die Aufgabe ausführt, wobei die gewünschte Leistung des komprimierten neuronalen Netzwerks durch ein Komprimierungsverhältnis und ein Verschlechterungsniveau definiert ist, wo das Komprimierungsverhältnis gemäß Rechenressourcen der Clientvorrichtung spezifiziert ist und wobei das verwendete Komprimierungsverfahren mindestens eines von Folgendem ist: eine Gewichtungsquantisierung, eine verlustfreie Quellcodierung, eine Beschneidung, eine Singulärwertzerlegung, eine Filterauswahl oder ein Strukturdesign;

- Mittel zum Senden der Anforderung an einen Server;
- Mittel zum Empfangen einer Antwort vom Server, die mindestens eine Identifizierung für einen Zugang zu mindestens einem komprimierten neuronalen Netzwerk umfasst, wobei das komprimierte neuronale Netzwerk mit Bezug auf ein neuronales Originalnetzwerk gemäß den Voraussetzungen vom Server erzeugt wurde; und
- Mittel zum Erhalten des komprimierten neuronalen Netzwerks mittels der Identifizierung, und
- Mittel zum Betreiben des komprimierten neuronalen Netzwerks, um die Aufgabe durchzuführen.

4. Einrichtung nach Anspruch 3, wobei die Informationen über die Voraussetzungen ferner eines oder mehreres von Folgendem umfassen:

- eine erforderliche Leistungsmetrik;
- eine erforderliche neuronale Netzwerkgröße;
- eine erforderliche Rechenkomplexität;
- eine Identifizierung eines Trainingsdatensatzes;
- Identifizierung eines Komprimierungsverfahrens.

5. Einrichtung nach Anspruch 3 oder 4, die ferner Mittel zum Bestimmen, ob das komprimierte neuronale Netzwerk zufriedenstellend ist, umfasst, wobei das Bestimmen auf den Informationen über die mindestens eine Voraussetzung und auf Informationen über das komprimierte neuronale Netzwerk basiert, und in Reaktion auf das Bestimmen, dass das komprimierte neuronale Netzwerk nicht zufriedenstellend ist, Mittel zum erneuten Senden der Anforderung an einen Server, wobei die Anforderung mindestens eine aktualisierte Voraussetzung für das komprimierte neuronale Netzwerk umfasst.

6. Einrichtung nach einem der Ansprüche 3 bis 5, die ferner Mittel zum Zugreifen auf das komprimierte neuronale Netzwerk über ein Kommunikationsnetzwerk umfasst, um den Server oder einen anderen Server zu veranlassen, die Aufgabe durch das komprimierte neuronale Netzwerk durchzuführen.

7. Einrichtung nach einem der Ansprüche 3 bis 6, wo die Antwort vom Server eines oder mehreres von Folgendem umfasst:

- einen neuronalen Netzwerk-Handle;
- eine geschätzte Zeit, zu der das identifizierte neuronale Netzwerk aktiv ist;
- eine geschätzte Wahrscheinlichkeit des Erfolgs zum Identifizieren eines neuronalen Netzwerks, das die Voraussetzungen erfüllt;
- eine geschätzte und/oder tatsächliche Leistungsmatrix des identifizierten neuronalen Netzwerks;
- eine tatsächliche Modellgröße des identifizierten neuronalen Netzwerks;
- ein Komprimierungsverfahren und/oder mindestens einen Komprimierungsparameter.

8. Einrichtung nach einem der Ansprüche 3 bis 7, wobei die Mittel mindestens einen Prozessor; und mindestens einen Speicher, der Computerprogrammcode beinhaltet, umfassen, wobei der mindestens eine Speicher und der Computerprogrammcode dazu ausgelegt sind, mit dem mindestens einen Prozessor die Durchführung der Einrichtung zu bewirken.

9. Einrichtung, die Folgendes umfasst:

- Mittel zum Empfangen einer Anforderung eines komprimierten neuronalen Netzwerks von einem Client, wobei die Anforderung mindestens eine Anzeige des neuronalen Originalnetzwerks für eine gewisse Aufgabe und mindestens die folgenden Voraussetzungen für das neuronale Netzwerk umfasst:

eine Beschreibung einer Aufgabe des neuronalen Netzwerks;
gewünschte Leistung des komprimierten neuronalen Netzwerks, das die Aufgabe ausführt, wobei die gewünschte Leistung des komprimierten neuronalen Netzwerks durch ein Komprimierungsverhältnis und ein Verschlechterungsniveau definiert wurde, wo das Komprimierungsverhältnis gemäß Rechenressourcen der Clientvorrichtung spezifiziert wurde und wobei das verwendete Komprimierungsverfahren mindestens eines von Folgendem ist: Gewichtungsquantisierung, verlustfreie Quellcodierung, Beschneidung, Singulärwertzerlegung, Filterauswahl oder Strukturdesign;

- Mittel zum Bestimmen von mindestens einem neuronalen Originalnetzwerk gemäß der Anzeige;

- Mittel zum Komprimieren des bestimmten mindestens einen neuronalen Originalnetzwerks gemäß den Voraussetzungen, um mindestens ein komprimiertes neuronales Netzwerk zu erhalten;
- Mittel zum Erzeugen einer Antwort, wobei die Antwort mindestens eine Identifizierung zum Erhalten des mindestens einen komprimierten neuronalen Netzwerks umfasst; und
- Mittel zum Senden der Antwort an den Client.

10. Einrichtung nach Anspruch 9, wobei die Informationen über die Voraussetzungen ferner eines oder mehreres von Folgendem umfassen:

    - eine erforderliche Leistungsmetrik;
    - eine erforderliche neuronale Netzwerkgröße;
    - eine erforderliche Rechenkomplexität;
    - eine Identifizierung eines Trainingsdatensatzes;
    - eine Identifizierung eines Komprimierungsverfahrens.

11. Einrichtung nach Anspruch 9 oder 10, wobei die Antwort an die Clientvorrichtung eines oder mehreres von Folgendem umfasst:

    - einen neuronalen Netzwerk-Handle;
    - eine geschätzte Zeit, zu der das identifizierte neuronale Netzwerk aktiv ist;
    - eine geschätzte Wahrscheinlichkeit des Erfolgs zum Identifizieren eines neuronalen Netzwerks, das die Voraussetzungen erfüllt;
    - eine geschätzte und/oder tatsächliche Leistungsmatrix des identifizierten neuronalen Netzwerks;
    - eine tatsächliche Modellgröße des identifizierten neuronalen Netzwerks;
    - ein Komprimierungsverfahren und/oder mindestens einen Komprimierungsparameter.

12. Einrichtung nach einem der Ansprüche 9 bis 11, die ferner Mittel zum Erzeugen eines neuen Netzwerks als eine Antwort auf die Anforderung von der Clientvorrichtung und zum Auswählen des neuen neuronalen Netzwerks für eine Komprimierung umfasst.

13. Einrichtung nach Anspruch 12, wobei das neue Netzwerk durch Trainieren desselben mit dem Trainingsdatensatz, der vom Client identifiziert wird, erzeugt wird.

## Revendications

1. Procédé exécuté par un dispositif client, comprenant :

- la génération d'une demande de réseau neuronal compressé, dans lequel la demande de génération comprend au moins une indication d'un réseau neuronal original pour une certaine tâche, et l'inclusion des exigences suivantes dans la demande

    une description d'une tâche du réseau neuronal ;
    une performance souhaitée du réseau neuronal compressé exécutant la tâche, dans lequel la performance souhaitée du réseau neuronal compressé est définie par un taux de compression et un niveau de détérioration, le taux de compression étant spécifié selon des ressources informatiques du dispositif client, et dans lequel le procédé de compression utilisé est au moins l'un des suivants : une quantification de poids, un codage de source sans perte, un élagage, une décomposition en valeurs singulières, une sélection de filtre ou une conception de structure ;

- l'envoi de la demande à un serveur ;
- la réception, du serveur, d'une réponse comprenant au moins une identification pour accéder à au moins un réseau neuronal compressé, ledit réseau neuronal compressé ayant été généré par le serveur par rapport à un réseau neuronal original selon lesdites exigences ; et
- l'obtention du réseau neuronal compressé au moyen de ladite identification, et
- l'exécution du réseau neuronal compressé pour réaliser la tâche.

2. Procédé exécuté par un dispositif serveur, comprenant :

- la réception d'une demande de réseau neuronal compressé de la part d'un client, dans lequel la demande comprend au moins une indication du réseau neuronal original pour une certaine tâche, et au moins les exigences suivantes pour le réseau neuronal :

une description d'une tâche du réseau neuronal ;
une performance souhaitée du réseau neuronal compressé exécutant la tâche, dans lequel la performance souhaitée du réseau neuronal compressé a été définie par un taux de compression et un niveau de détérioration, le taux de compression ayant été spécifié selon des ressources informatiques du dispositif client, et dans lequel le procédé de compression utilisé est au moins l'un des suivants : une quantification de poids, un codage de source sans perte, un élagage, une décomposition en valeurs singulières, une sélection de filtre ou une conception de structure ;

- la détermination d'au moins un réseau neuronal original selon ladite indication ;
- la compression de l'au moins un réseau neuronal original déterminé selon lesdites exigences pour obtenir au moins un réseau neuronal compressé ;
- la génération d'une réponse, ladite réponse comprenant au moins une identification pour obtenir ledit au moins un réseau neuronal compressé ; et
- l'envoi de la réponse au client.

3.  Appareil comprenant :

- des moyens pour générer une demande de réseau neuronal compressé, dans lequel la demande de génération comprend au moins une indication d'un réseau neuronal original pour une certaine tâche, et l'inclusion des exigences suivantes dans la demande

une description d'une tâche du réseau neuronal ;
une performance souhaitée du réseau neuronal compressé exécutant la tâche, dans lequel la performance souhaitée du réseau neuronal compressé est définie par un taux de compression et un niveau de détérioration, le taux de compression étant spécifié selon des ressources informatiques du dispositif client, et dans lequel le procédé de compression utilisé est au moins l'un des suivants : une quantification de poids, un codage de source sans perte, un élagage, une décomposition en valeurs singulières, une sélection de filtre ou une conception de structure ;

- des moyens pour envoyer la demande à un serveur ;
- des moyens pour recevoir du serveur une réponse comprenant au moins une identification pour accéder à au moins un réseau neuronal compressé, ledit réseau neuronal compressé ayant été généré par le serveur par rapport à un réseau neuronal original selon lesdites exigences ; et
- des moyens pour obtenir du réseau neuronal compressé au moyen de ladite identification, et
- des moyens pour exécuter du réseau neuronal compressé pour réaliser la tâche.

4.  Appareil selon la revendication 3, où les informations sur lesdites exigences comprennent en outre un ou plusieurs des éléments suivants :

- une métrique de performance requise ;
- une taille de réseau neuronal requise ;
- une complexité de calcul requise ;
- une identification de jeu de données d'entraînement ;
- l'identification d'un procédé de compression.

5.  Appareil selon la revendication 3 ou 4, comprenant en outre des moyens pour déterminer si le réseau neuronal compressé est satisfaisant, la détermination étant basée sur les informations sur l'au moins une exigence et sur les informations sur le réseau neuronal compressé, et en réponse à la détermination du fait que le réseau neuronal compressé n'est pas satisfaisant, des moyens pour renvoyer la demande à un serveur, la demande comprenant au moins une exigence mise à jour pour le réseau neuronal compressé.

6.  Appareil selon l'une des revendications 3 à 5, comprenant en outre des moyens pour accéder au réseau neuronal compressé via un réseau de communication pour amener le serveur ou un autre serveur à réaliser la tâche par le réseau neuronal compressé.

**7.** Appareil selon l'une des revendications 3 à 6, où la réponse du serveur comprend un ou plusieurs des éléments suivants :

- une gestion de réseau neuronal ;
- un temps estimé lorsque le réseau neuronal identifié est actif ;
- une estimation de la probabilité de succès de l'identification d'un réseau neuronal répondant aux exigences ;
- une matrice de performance estimée et/ou réelle du réseau neuronal identifié ;
- une taille de modèle réelle du réseau neuronal identifié ;
- un procédé de compression et/ou au moins un paramètre de compression.

**8.** Appareil selon l'une des revendications 3 à 7, dans lequel les moyens comprennent au moins un processeur ; et au moins une mémoire comportant un code de programme informatique, l'au moins une mémoire et le code de programme informatique étant configurés pour, avec l'au moins un processeur, provoquer la performance de l'appareil.

**9.** Appareil comprenant :

- des moyens pour recevoir une demande de réseau neuronal compressé de la part d'un client, dans lequel la demande comprend au moins une indication du réseau neuronal original pour une certaine tâche, et au moins les exigences suivantes pour le réseau neuronal :

une description d'une tâche du réseau neuronal ;
une performance souhaitée du réseau neuronal compressé exécutant la tâche, dans lequel la performance souhaitée du réseau neuronal compressé a été définie par un taux de compression et un niveau de détérioration, le taux de compression ayant été spécifié selon des ressources informatiques du dispositif client, et dans lequel le procédé de compression utilisé est au moins l'un des suivants : une quantification de poids, un codage de source sans perte, un élagage, une décomposition en valeurs singulières, une sélection de filtre ou une conception de structure ;

- des moyens pour déterminer au moins un réseau neuronal original selon ladite indication ;
- des moyens compresser l'au moins un réseau neuronal original déterminé selon lesdites exigences pour obtenir au moins un réseau neuronal compressé ;
- des moyens pour générer une réponse, ladite réponse comprenant au moins une identification pour obtenir ledit au moins un réseau neuronal compressé ; et
- des moyens pour envoyer la réponse au client.

**10.** Appareil selon la revendication 9, où les informations sur lesdites exigences comprennent en outre un ou plusieurs des éléments suivants :

- une métrique de performance requise ;
- une taille de réseau neuronal requise ;
- une complexité de calcul requise ;
- une identification de jeu de données d'entraînement ;
- l'identification d'un procédé de compression.

**11.** Appareil selon la revendication 9 ou 10, où la réponse au dispositif client comprend un ou plusieurs des éléments suivants :

- une gestion de réseau neuronal ;
- un temps estimé lorsque le réseau neuronal identifié est actif ;
- une estimation de la probabilité de succès de l'identification d'un réseau neuronal répondant aux exigences ;
- une matrice de performance estimée et/ou réelle du réseau neuronal identifié ;
- une taille de modèle réelle du réseau neuronal identifié ;
- un procédé de compression et/ou au moins un paramètre de compression.

**12.** Appareil selon l'une des revendications 9 à 11, comprenant en outre des moyens pour générer un nouveau réseau en réponse à la demande du dispositif client et pour sélectionner le nouveau réseau neuronal pour la compression.

**13.** Appareil selon la revendication 12, dans lequel le nouveau réseau est généré par son entraînement avec le jeu de données d'entraînement identifié par le client.

Fig. 1

Fig. 2

input

C1

4 feature
maps

C2

6 feature
maps

C3

8 feature
maps

Fully
connected
MLP

307 LOCAL DATASETS

306 PERFORMANCE REQUIREMENT MATRIX

NN RECEIVER (TASK PERFORMER) 305

302 NNR STANDARDS

301 ORIGINAL NN'S

303 COMPRESSION

304 COMPRESSED NETWORKS

310

REQUESTS

RESPONSES ON DEMAND

Fig. 3

Fig. 4

Client

NN
Compression
Service

NN
storage
server

Comress
ed NN
storage
server

HTTP REST API (HTTP POST request with link to NN to compress and configuration parameters or descriptions)

HTTP RESPONSE (HTTP OK with agreed configuration parameters or descriptions and link to compressed NN)

HTTP GET Request to the compressed NN storage server

HTTP GET Response with the NN model data

HTTP REST API (HTTP Request to the compressed NN process check)

HTTP Response (OK if Compressed NN is ready, including final configuration parameters)

HTTP Response (Resource not available if compressed NN is not ready, with possible finalization time. client should re-try)

HTTP REST API (HTTP Request to the compressed NN process check)

HTTP REST API (HTTP Response containing compresed NN model)

Fig. 5

EP 3 683 733 B1

Client

Server

HTTP REST API (HTTP POST a media file containing the NN to be compressed and configuration parameters)
This is similar to file upload

HTTP REST API (HTTP Request to the compressed NN Link)

HTTP Response (OK if Compressed NN is ready, including final configuration parameters)

HTTP Response (Resource not available if compressed NN is not ready, with possible finalization time. client should re-try)

Fig. 6

generate a request for a neural network, wherein the generating comprises including into the request information on at least one requirement for the neural network  ⌐ 710

↓

send the generated request to a server  ⌐ 720

↓

receive from the server a response comprising at least means for Identifying a compressed version of the requested neural network, said neural network having been compressed according to the at least one requirement  ⌐ 730

↓

cause the neural network to perform a task, wherein the neural network is accessed by means of said identification  ⌐ 740

Fig. 7

receive a request for a neural network from a client, wherein the request comprises information on at least one requirement for the neural network  ⌐ 810

↓

select a neural network  ⌐ 820

↓

compress the selected neural network according to the at least one requirement to obtain a compressed version of the selected neural network  ⌐ 830

↓

generate a response, said response comprising at least means for identifying the compressed version of the neural network  ⌐ 840

↓

send the response to the client  ⌐ 850

Fig. 8

EP 3 683 733 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170132511 A